# EUROPÄISCHE PATENTSCHRIFT

(11) **EP 3 136 524 B1**
(45) Veröffentlichungstag und Bekanntmachung des Hinweises auf die Patenterteilung: **04.03.2020**
(21) Anmeldenummer: 16186057.2
(22) Anmeldetag: 26.08.2016
(51) Int. Cl.: H02B 1/16, H01R 4/30, H02B 1/30, H01R 4/64, H01R 31/08

(54) **ERDUNGSMUTTERNKETTE**
GROUNDING NUTS CHAIN
CHAINE D'ECROUS DE MISE A LA TERRE

(30) Priorität: 28.08.2015 DE 102015114422
(43) Veröffentlichungstag der Anmeldung: 01.03.2017
(73) Patentinhaber: LISI AUTOMOTIVE Mecano GmbH, 69123 Heidelberg (DE)
(72) Erfinder: DEMEL, Otto, 69123 Heidelberg (DE); HOFFMANN, Walter, 68766 Hockenheim (DE); SCHAAF, Stefan, 67435 Neustadt (DE)
(74) Vertreter: Habermann Intellectual Property Partnerschaft von Patentanwälten mbB

(56) Entgegenhaltungen:
- DE-A1- 1 540 378
- DE-A1- 3 437 463
- DE-U1- 29 512 907
- US-A- 3 832 604

## Beschreibung

Die Erfindung betrifft eine Erdungsmutternkette zur Anordnung an einem Schaltschrank, einem Lochblech, einem Lochprofil oder dergleichen, wobei die Erdungsmutternkette mehrere Muttern aufweist, wobei die Muttern beabstandet zueinander angeordnet sind, wobei jeweils benachbart angeordnete Muttern über ein Verbindungselement miteinander verbunden sind und ein Abstand der Muttern zueinander an einen Lochabstand von Ausnehmungen des Schaltschranks, des Lochblechs oder dergleichen angepasst ist, so dass die Muttern der Erdungsmutternkette an den Ausnehmungen angeordnet werden können.

Herkömmliche Schaltschränke weisen zur Montage elektrischer Bauteile üblicherweise mehrere, beabstandet zueinander angeordnete Ausnehmungen in geeigneten Montageblechen auf. Bei der Montage der elektrischen bzw. elektronischen Komponenten in dem Schaltschrank ist es üblich, eine elektrisch leitende Verbindung zwischen den Komponenten und dem Schaltschrankgehäuse herzustellen, um eine ausreichende Erdung der elektrischen bzw. elektronischen Komponenten zu ermöglichen.

Zu diesem Zweck ist es erforderlich, die zur Herstellung der elektrisch leitenden Verbindung vorgesehene Stelle des Schaltschrankgehäuses von der dort üblicherweise vorgesehenen Lackierung zu befreien und das darunter gelegene, elektrisch leitende Gehäuseblech freizulegen. Um diese Herstellung einer elektrisch leitenden Verbindung zu vereinfachen, ist es aus dem Stand der Technik bekannt, in den für die Montage vorgesehenen Ausnehmungen sogenannte Erdungsmuttern einzusetzen und mit Hilfe geeigneter und an die Erdungsmuttern angepasster Schrauben an dem Schaltschrankgehäuse festzulegen.

Die Erdungsmuttern weisen in Einbaulage in Richtung des Schaltschrankgehäuses ausgerichtete Klingen oder dergleichen auf, die bei der Montage der Erdungsmuttern die Lackschicht des Schaltschrankgehäuses einschneiden, bis die Klingen an dem elektrisch leitenden Blech des Schaltschrankgehäuses anliegen. Die Klingen oder vergleichbaren Elemente zum Einschneiden bzw. Entfernen der Lackschicht sind ebenfalls elektrisch leitend ausgestaltet, so dass über die Klinge und die elektrisch leitend mit der Klinge verbundene Erdungsmutter eine elektrisch leitende Verbindung mit beliebigen elektrischen bzw. elektronischen Komponenten dadurch hergestellt werden kann, dass die Mutter beispielsweise über eine Kabelverbindung mit der jeweiligen elektrischen bzw. elektronischen Komponente verbunden wird. Zu diesem Zweck kann das Kabel beispielsweise mit Hilfe eines geeigneten Kabelschuhs mit der Schraube an der Mutter festgelegt werden.

Zur Herstellung einer ausreichenden elektrischen Verbindung der verschiedenen elektrischen und elektronischen Komponenten mit dem Schaltschrankgehäuse ist es üblicherweise erforderlich, mehrere Erdungsmuttern an dem Schaltschrankgehäuse anzuordnen und mit den jeweiligen Komponenten elektrisch leitend zu verbinden. Hierdurch entsteht ein erheblicher Montageaufwand.

Beispielsweise in DE 15 40 378 A1 oder US 3 832 604 A werden Schaltschränke mit Erdungsmutternketten beschrieben, die an einem geeigneten Befestigungsabschnitt des Schaltschranks festgelegt werden können.

In DE 34 37 463 A1 ist eine Sammelschiene beispielsweise zum Einbau in einen Schaltschrank beschrieben, bei der mehrere Muttern in einem festen Rasterabstand beabstandet zueinander drehfest an der Sammelschiene angeordnet sind. Die Sammelschiene kann an den in einem passenden Lochabstand angeordneten Ausnehmungen in dem Schaltschrank festgelegt werden. In DE 295 12 907 U1 ist eine Potentialausgleichsschiene beschrieben, bei welcher ebenfalls mehrere Anschlussstellen für Erdungsleiter an der Potentialausgleichsschiene angeordnet sind, die ihrerseits über Fußteile an einem Schaltschrank festgelegt werden kann. Die aus dem Stand der Technik bekannten Schienen lassen sich jedoch nicht in einfacher Weise an einem Befestigungsabschnitt eines Schaltschranks festlegen, um anschließend Erdungsleiter mit einzelnen Erdungsmuttern elektrisch leitend verbinden zu können.

Als Aufgabe der Erfindung wird es angesehen, den durch die Verwendung herkömmlicher Erdungsmuttern hervorgerufenen Montageaufwand bei der Herstellung elektrisch leitender Verbindungen der elektrischen bzw. elektronischen Komponenten mit dem Schaltschrankgehäuse zu reduzieren.

Diese Aufgabe wird erfindungsgemäß durch eine eingangs beschriebene Erdungsmutternkette zur Anordnung an einem Schaltschrank, einem Lochblech oder dergleichen gelöst, wobei das Verbindungselement einen Halteschenkel aufweist, so dass das Verbindungselement klemmend an einem Befestigungsabschnitt des Schaltschranks, des Lochblechs oder dergleichen angeordnet werden kann, wobei das Verbindungselement S-profilförmig ausgestaltet ist, wobei der Halteschenkel in einen Anlageschenkel übergeht, wobei der Befestigungsabschnitt zwischen dem Anlageschenkel und dem Halteschenkel klemmend festgelegt werden kann, wobei der Anlageschenkel in einen Aufnahmeschenkel übergeht und wobei die Muttern zwischen dem Aufnahmeschenkel und dem Anlageschenkel angeordnet sind. Auf diese Weise können in einem Montageschritt mehrere Erdungsmuttern an entsprechenden Ausnehmungen des Schaltschranks angeordnet werden. Dadurch wird der Montageaufwand bei der Herstellung der elektrisch leitenden Verbindungen der elektrischen bzw. elektronischen Komponenten mit dem Schaltschrankgehäuse erheblich reduziert und gleichzeitig erreicht, dass bei der Montage die verwendeten Muttern verliersicher miteinander verbunden sind, so dass ein versehentliches Herabfallen der Muttern bei der Montage in den mit elektrisch leitenden Komponenten ausgestatteten Bereiche des Schaltschranks vermieden wird.

Durch eine klemmende Festlegung der Erdungsmutternkette mit Hilfe des Halteschenkels kann die Erdungsmutternkette zunächst einfach an dem Schaltschrank angeordnet werden, bevor die einzelnen Muttern über entsprechende Schrauben fest mit dem Schaltschrank verbunden werden. Erfindungsgemäß ist vorgesehen, dass die Verbindungselemente mit den Halteschenkeln einfach über einen streifenförmigen Abschnitt des Schaltschranks oder dergleichen, in dem die Ausnehmungen angeordnet sind, geschoben bzw. gestülpt werden können und kraftschlüssig an diesem streifenförmigen Abschnitt festgelegt werden können.

Vorteilhafterweise sind die Schenkel des S-profilförmig ausgestalteten Verbindungselements so ausgestaltet und miteinander verbunden, dass die Schenkel relativ zueinander elastisch verschwenkt werden können, sodass das Verbindungselement auf den streifenförmigen Abschnitt geschoben werden und dort klemmend festgelegt werden kann und dass die Muttern einfach zwischen dem Halteschenkel und dem Anlageschenkel angeordnet werden können.

Bei Verwendung des S-profilförmig ausgestalteten Verbindungselements können beispielsweise defekte Muttern einfach ausgetauscht werden, indem der Aufnahmeschenkel leicht aufgebogen und die klemmend zwischen dem Aufnahmeschenkel und dem Anlageschenkel angeordneten Muttern entnommen werden. Erfindungsgemäß ist auch vorgesehen, dass die Muttern einen an einen Umfang der Ausnehmungen des Aufnahmeschenkels angepassten Kopfabschnitt und einen über den Kopfabschnitt seitlich hinausragenden Anlageabschnitt aufweist, wobei der Kopfabschnitt in der Ausnehmung angeordnet werden kann und der Anlageabschnitt an dem Rand der Ausnehmung anliegt. Auf diese Weise können die Muttern kraft- und formschlüssig an dem Verbindungselement festgelegt werden. Die Muttern können auf diese Weise auch ohne zusätzlichen konstruktiven Aufwand oder Montageaufwand verdrehsicher an dem Verbindungselement festgelegt sein, um das Eindrehen einer Befestigungsschraube zu erleichtern.

Die Verbindungselemente der Erdungsmutternkette sind vorteilhafterweise starr ausgeführt, so dass die Montage der Erdungsmutternkette an benachbarten Ausnehmungen weiter vereinfacht wird. Erfindungsgemäß sind auch die Muttern starr mit den Verbindungselementen verbunden.

Erfindungsgemäß ist vorteilhafterweise vorgesehen, dass die Muttern verlagerbar an den Verbindungselementen angeordnet sind, so dass der Abstand der Muttern zueinander an den Lochabstand der Ausnehmungen angepasst werden kann. Auf diese Weise kann die Erdungsmutternkette für eine Vielzahl unterschiedlicher Schaltschränke und dergleichen verwendet werden und der Abstand der Muttern an den jeweiligen Lochabstand einfach angepasst werden.

Um die Anzahl der Muttern der verwendeten Erdungsmutternkette an die benötigte Anzahl anpassen zu können, ist erfindungsgemäß vorgesehen, dass mindestens ein Verbindungselement eine Auftrenneinrichtung aufweist, wobei die Erdungsmutternkette mit Hilfe der Auftrenneinrichtung aufgetrennt werden kann. Erfindungsgemäß ist zu diesem Zweck vorgesehen, dass einzelne Verbindungselemente der Erdungsmutternkette Schwächungsbereiche aufweisen, durch die Sollbruchstellen gebildet sind, wobei durch eine geeignete Knickbewegung der Erdungsmutternkette das entsprechende Verbindungselement im Bereich dieser Sollbruchstelle aufgetrennt werden kann. Es sind aber auch andere Auftrenneinrichtungen denkbar und erfindungsgemäß vorgesehen.

Zur Herstellung einer ausreichenden klemmenden Verbindung zwischen dem Schaltschrank oder dergleichen und der Erdungsmutternkette ist erfindungsgemäß vorgesehen, dass der Halteschenkel ein Klemmteil aufweist. Vorteilhafterweise stützt sich das Klemmteil in Einbaulage gegen das Schaltschrankgehäuse bzw. den streifenförmigen Abschnitt ab und verursacht eine elastische Verformung des Halteschenkels bzw. des Verbindungselements, durch die eine ausreichende Rückstellkraft hervorgerufen wird, um die Erdungsmutternkette sicher an dem Schaltschrank zu halten.

Bei einer besonders vorteilhaften Ausgestaltung der erfindungsgemäßen Erdungsmutternkette ist vorgesehen, dass in dem Aufnahmeschenkel Ausnehmungen vorgesehen sind, wobei die Muttern jeweils klemmend zwischen einem Rand der jeweiligen Ausnehmung und dem Anlageschenkel festgelegt werden können.

Um die Herstellung der Erdungsmutternkette zu vereinfachen, ist erfindungsgemäß vorgesehen, dass das Verbindungselement einstückig hergestellt ist. Vorteilhafterweise kann das Verbindungselement aus einem Bleichstreifen durch Abkanten und Stanzen hergestellt werden.

Zur einfacheren Montage der Erdungsmutternkette ist erfindungsgemäß vorgesehen, dass mindestens ein Schenkelende des S-profilförmig ausgestalteten Verbindungselements nach außen abgewinkelt ausgestaltet ist. Auf diese Weise kann beispielsweise der Halteschenkel einfach per Hand oder mit einem geeigneten Werkzeug angehoben und wieder von dem streifenförmigen Abschnitt gelöst werden. Zudem ist es auf diese Weise einfacher möglich, die Erdungsmutternkette auf den streifenförmigen Abschnitt aufzuschieben, da durch das abgewinkelte Schenkelende eine entsprechende Führung zur Montage bereitgestellt wird.

Vorteilhafterweise ist erfindungsgemäß vorgesehen, dass mehrere Verbindungselemente miteinander verbunden sind und einen Verbindungselementestreifen bilden. Auf diese Weise können nahezu beliebig lange Erdungsmutternketten bereitgestellt werden.

Zur Herstellung ist erfindungsgemäß vorgesehen, dass die Muttern jeweils mindestens ein Erdungsteil aufweisen, um elektrisch leitende Verbindungen zu dem Schaltschrank, dem Lochblech, dem Lochprofil oder dergleichen herzustellen. Bei dem Erdungsteil kann es sich erfindungsgemäß um geeignete Klingen, Krallen oder dergleichen handeln, mit denen die Lackschicht des Gehäuses durchtrennt oder abgetragen werden kann.

Erfindungsgemäß ist vorgesehen, dass die Verbindungselemente jeweils mindestens ein Erdungsteil aufweisen. Auf diese Weise können mehrere Muttern gleichzeitig über das Verbindungselement und das an dem Verbindungselement angeordnete Erdungsteil elektrisch leitend mit dem Schaltschrankgehäuse verbunden werden. Zu diesem Zweck sind das Verbindungselement, die Muttern sowie das Erdungsteil vorteilhafterweise elektrisch leitend ausgestaltet und elektrisch leitend miteinander verbunden. Vorteilhafterweise ist die Erdungsmutternkette aus einem geeigneten, elektrisch leitenden Metall hergestellt.

Erfindungsgemäß ist vorteilhafterweise vorgesehen, dass das Erdungsteil durch das Klemmteil gebildet sein kann. Auf diese Weise wird durch das Klemmteil die ausreichende kraftschlüssige Verbindung erreicht, wobei das Klemmteil zusätzlich so ausgestaltet ist, dass das Klemmteil die Lackschicht des Schaltschranks oder dergleichen durchschneidet bzw. bereichsweise entfernt und so die Erdung hergestellt wird. Zu diesem Zweck ist das Klemmteil vorteilhafterweise aus einem elektrisch leitenden Material hergestellt und elektrisch leitend mit der Mutter verbunden.

Um nach außen abstehende scharfe Kanten oder Ecken eines Erdungsteils und eine darauf zurückgehende Verletzungsgefahr bei der Handhabung und Montage einer Erdungsmutternkette zu vermeiden ist vorgesehen, dass bei dem S-profilförmigen Verbindungselement die vorspringend ausgestalteten Abschnitte des Erdungsteils nach innen vorspringend ausgebildet sind und ein vorspringender Endabschnitt des Erdungsteils nach außen gerichtet ist, und dass der Endabschnitt des Erdungsteils bei einer Festlegung einer Komponente an der Erdungsmutternkette nach außen vorspringend verlagert werden kann.

Dabei kann ein Erdungsteil beispielsweise bogenförmig ausgestaltet und zunächst nach innen gerichtet sein. Ein scharfkantiger Endabschnitt des Erdungsteils ist wieder nach außen gerichtet, jedoch noch vollständig in einem von Profilschenkeln umgebenen Innenraum angeordnet ist. Bei einer Festlegung einer Komponente an der Erdungsmutternkette wird das S-profilförmige Verbindungselement zusammengedrückt und das bogenförmige Erdungsteil nach außen verformt, so dass der scharfkantige Endabschnitt des bogenförmigen Erdungsteils nach außen verbogen und außerhalb des Verbindungselements in eine Oberfläche der dort anliegenden Komponente eingepresst wird und einen elektrisch leitenden Kontakt herstellen kann.

Weitere vorteilhafte Ausgestaltungen der erfindungsgemäßen Erdungsmutternkette werden anhand eines, in der Zeichnung dargestellten Ausführungsbeispiels näher erläutert.

Es zeigen:
Fig. 1 eine schematisch dargestellte Ansicht einer S-Profilförmig ausgestalteten Erdungsmutternkette,
Fig. 2 eine weitere schematisch dargestellte Ansicht der in Figur 1 dargestellten S-Profilförmig ausgestalteten Erdungsmutternkette aus einer anderen Perspektive und
Fig. 3 eine schematisch dargestellte Schnittansicht der in den Figuren 1 und 2 dargestellten Erdungsmutternkette.

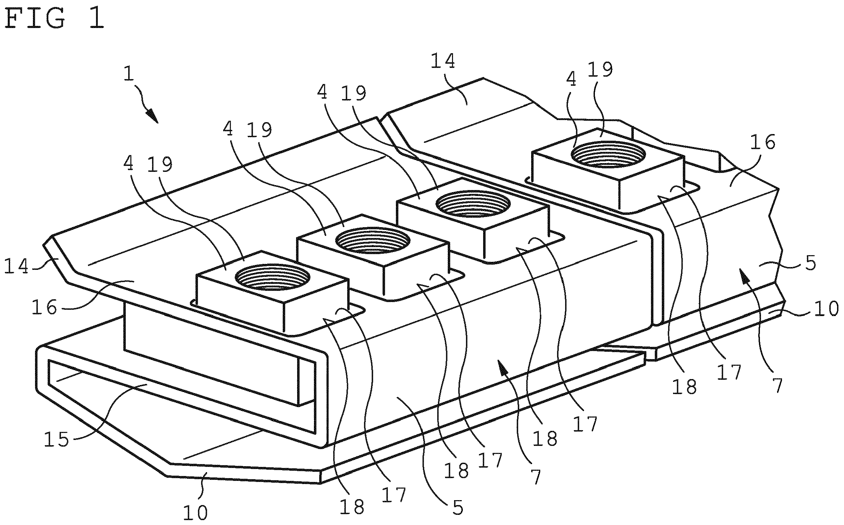

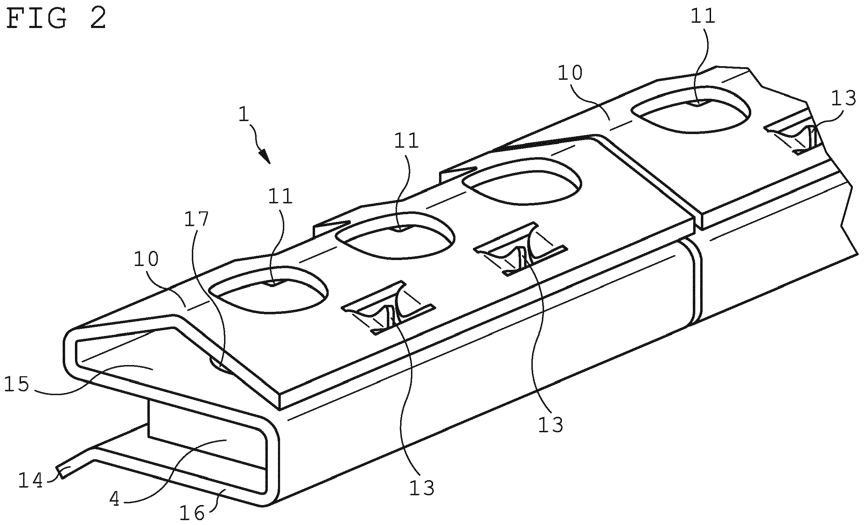

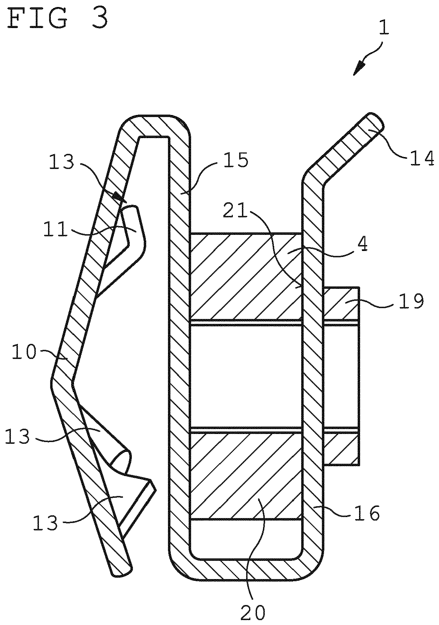

In den Figuren 1 bis 3 sind verschiedene Ansichten einer Erdungsmutternkette 1 mit einem Verbindungselementestreifen 7 aus mehreren S-profilförmig ausgestalteten Verbindungselementen 5 schematisch dargestellt. Die S-profilförmig ausgestalteten Verbindungselemente 5 weisen jeweils einen Halteschenkel 10 auf, der in einen Anlageschenkel 15 übergeht. Zudem weisen die Verbindungselemente 5 jeweils einen Aufnahmeschenkel 16 aus, der ebenfalls in den Anlageschenkel 15 übergeht.

Zwischen dem Halteschenkel 10 und dem Anlageschenkel 15 der jeweiligen Verbindungselemente 5 kann ein nicht dargestellter Befestigungsabschnitt eines Schaltschranks oder dergleichen klemmend festgelegt werden.

Die Erdungsmutternkette 1 weist mehrere Muttern 4 auf, die beabstandet zueinander an Verbindungselementen 5 angeordnet sind. Ein Abstand der Muttern 4 zueinander ist an einen Abstand von Ausnehmungen angepasst, die in einem streifenförmigen Abschnitt eines Schaltschranks vorgesehen sind. Die Erdungsmutternkette 1 kann durch Anordnung geeigneter und nicht dargestellter Schrauben in den Muttern 4 der Erdungsmutternkette 1 an den Ausnehmungen des streifenförmigen Abschnitts des Schaltschranks dauerhaft festgelegt und elektrisch leitend mit dem Schaltschrank verbunden werden.

Die Verbindungselemente 5 der Erdungsmutternkette 1 sind jeweils miteinander verbunden und bilden einen Verbindungselementestreifen 7. Einzelne Verbindungselemente des Verbindungselementestreifens 7 weisen Auftrenneinrichtungen auf, um die Erdungsmutternkette 1 auftrennen zu können. Die Auftrenneinrichtungen sind durch Schwächungsbereiche gebildet, die jeweils Sollbruchstellen darstellen, so dass die Erdungsmutternkette 1 durch eine geeignete Knickbewegung in dem Bereich der Auftrenneinrichtungen aufgetrennt werden kann.

In den Aufnahmeschenkeln 16 sind jeweils Ausnehmungen 17 ausgebildet, wobei die Muttern 4 jeweils einen an einen Umfang 18 der Ausnehmungen 17 angepassten Kopfabschnitt 19 und einen über den Kopfabschnitt 19 seitlich hinausragenden Anlageabschnitt 20 aufweisen. Um eine verdrehsichere Festlegung der Muttern 4 zu gewährleisten ist eine in einer Erstreckungsrichtung der Erdungsmutternkette 1 gerichtete Länge der Ausnehmungen 17 an eine Länge der Kopfabschnitte 19 angepasst, so dass die Muttern 4 entlang dieser Seitenkanten jeweils flächig an der Ausnehmung 17 anliegen. Dagegen weisen die Ausnehmungen 17 eine quer zur Erstreckungsrichtung der Erdungsmutternkette 1 gerichtete Breite auf, die etwas größer als eine Breite der Kopfabschnitte 19 der Muttern 4 ist, so dass die Muttern 4 in einer Richtung quer zur Erstreckungsrichtung der Erdungsmutternkette 1 ein gewisses Spiel aufweisen, um die bei einer Montage auftretenden Toleranzen bei der Festlegung der Muttern 4 ausgleichen zu können.

Die Muttern 4 sind so zwischen dem jeweiligen Anlageschenkel 15 und dem zugehörigen Aufnahmeschenkel 16 angeordnet, dass der Kopfabschnitt 19 jeweils in der zugeordneten Ausnehmung 17 angeordnet ist und der Anlageabschnitt 20 an einem Rand 21 der Ausnehmung 17 anliegt.

Die Erdungsteile 13 und die Klemmteile 11 sind an dem nach außen gewölbten Halteschenkel 10 ausgebildet und jeweils nach innen vorspringend, bzw. zu dem gegenüberliegenden Anlageschenkel 15 gerichtet. Auf diese Weise kann erreicht werden, dass die scharfkantigen Endabschnitte der Erdungsteile 13 und der Klemmteile 11 während der Handhabung und Montage der Erdungsmutternkette 1 nicht von außen zugänglich sind und deshalb kein nennenswertes Verletzungsrisiko bilden. Bei einer Befestigung einer Komponente mit der Erdungsmutternkette 1 werden der Halteschenkel 10 und der Anlageschenkel 15 zusammengedrückt und die scharfkantigen Endabschnitte der Erdungsteile 13 und der Klemmteile 11 zu beiden Seiten des Halteschenkels 10 nach außen vorspringend in eine außen an dem Halteschenkel 10 anliegende Komponente und in den zwischen dem Halteschenkel 10 und dem Anlageschenkel 15 angeordneten streifenförmigen Abschnitt 2 des Schaltschranks 3 eingepresst, so dass ohne zusätzliche Maßnahmen bei der Befestigung der Komponente an dem Schaltschrank 3 ein elektrisch leitender Kontakt und damit eine wirksame Erdung der Komponente erreicht wird.

## Patentansprüche

1. Erdungsmutternkette (1) zur Anordnung an einem Schaltschrank (3), einem Lochblech, einem Lochprofil oder dergleichen, wobei die Erdungsmutternkette (1) mehrere Muttern (4) aufweist, wobei die Muttern (4) beabstandet zueinander angeordnet sind, wobei jeweils benachbart angeordnete Muttern (4) über ein Verbindungselement (5) miteinander verbunden sind und ein Abstand der Muttern (4) zueinander an einen Lochabstand von Ausnehmungen (6) des Schaltschranks (3), des Lochblechs oder dergleichen angepasst ist, so dass die Muttern (4) der Erdungsmutternkette (1) an den Ausnehmungen (6) angeordnet werden können, **dadurch gekennzeichnet, dass** das Verbindungselement (5) einen Halteschenkel (10) aufweist, so dass das Verbindungselement (5) klemmend an einem Befestigungsabschnitt des Schaltschranks (3), des Lochblechs oder dergleichen angeordnet werden kann und dass das Verbindungselement (5) S-profilförmig ausgestaltet ist, wobei der Halteschenkel (10) in einen Anlageschenkel übergeht, wobei der Befestigungsabschnitt zwischen dem Anlageschenkel und dem Halteschenkel (10) klemmend festgelegt werden kann, wobei der Anlageschenkel in einen Aufnahmeschenkel übergeht und wobei die Muttern (4) zwischen dem Aufnahmeschenkel und dem Anlageschenkel angeordnet sind.

2. Erdungsmutternkette (1) gemäß Anspruch 1, **dadurch gekennzeichnet, dass** mindestens ein Verbindungselement (5) eine Auftrenneinrichtung (9) aufweist, wobei die Erdungsmutternkette (1) mit Hilfe der Auftrenneinrichtung (9) aufgetrennt werden kann.

3. Erdungsmutternkette (1) gemäß Anspruch 1 oder Anspruch 2, **dadurch gekennzeichnet, dass** der Halteschenkel (10) ein Klemmteil (11) aufweist.

4. Erdungsmutternkette (1) gemäß einem der voranstehenden Ansprüche, **dadurch gekennzeichnet, dass** in dem Aufnahmeschenkel Ausnehmungen vorgesehen sind, wobei die Muttern (4) jeweils klemmend zwischen einem Rand der jeweiligen Ausnehmung und dem Anlageschenkel festgelegt werden können.

5. Erdungsmutternkette (1) gemäß einem der voranstehenden Ansprüche, **dadurch gekennzeichnet, dass** das Verbindungselement (5) einstückig hergestellt ist.

6. Erdungsmutternkette (1) gemäß einem der voranstehenden Ansprüche, **dadurch gekennzeichnet, dass** mindestens ein Schenkelende des S-profilförmig ausgestalteten Verbindungselements (5) nach außen abgewinkelt ausgestaltet ist.

7. Erdungsmutternkette (1) gemäß einem der voranstehenden Ansprüche, **dadurch gekennzeichnet, dass** mehrere Verbindungselemente (5) miteinander verbunden sind und einen Verbindungselementestreifen (7) bilden.

8. Erdungsmutternkette (1) gemäß einem der voranstehenden Ansprüche, **dadurch gekennzeichnet, dass** die Verbindungselemente (5) jeweils mindestens ein Erdungsteil (13) aufweisen.

9. Erdungsmutternkette (1) gemäß Anspruch 8, **dadurch gekennzeichnet, dass** mindestens ein Erdungsteil (13) bei dem S-profilförmigen Verbindungselement (5) nach innen vorspringend ausgebildet ist und ein vorspringender Endabschnitt des Erdungsteils (13) nach außen gerichtet ist, und dass der Endabschnitt des Erdungsteils (13) bei einer Festlegung einer Komponente an der Erdungsmutternkette (1) nach außen vorspringend verlagert werden kann.

## Claims

1. Grounding nuts chain (1) for arrangement on a control cabinet (3), a perforated steel plate, a perforated profile or the like, wherein the grounding nuts chain (1) comprises multiple nuts (4), wherein the nuts (4) are arranged spaced from one another, wherein respectively adjacently-arranged nuts (4) are connected to one another via a connecting element (5), and a distance of the nuts (4) from one another is adapted to a hole distance of recesses (6) of the control cabinet (3), of the perforated steel plate or the like, so that the nuts (4) of the grounding nuts chain (1) can be arranged on the recesses (1), **characterized in that** the connecting element (5) comprises a holding leg (10) so that the connecting element (5) can be arranged on attachment portion of the control cabinet (3), of the perforated steel plate or the like in a clamping manner, and **in that** the connecting element (5) is configured in the form of an S-profile, wherein the holding leg (10) merges into an abutting leg, wherein the attachment portion can be secured between the abutting leg and the holding leg (10) in a clamping manner, wherein the abutting leg merges into a receiving leg and wherein the nuts (4) are arranged between the receiving leg and the abutting leg.

2. Grounding nuts chain (1) according to claim 1, **characterized in that** at least one connecting element (5) comprises a disconnection means (9), wherein the grounding nuts chain (1) can be disconnected using the disconnection means (9).

3. Grounding nuts chain (1) according to claim 1 or claim 2, **characterized in that** the holding leg (10) comprises a clamping part (11).

4. Grounding nuts chain (1) according to one of the preceding claims, **characterized in that** recesses are provided in the receiving leg, wherein the nuts (4) can in each case be secured between an edge of the respective recess and the abutting leg in a clamped manner.

5. Grounding nuts chain (1) according to one of the preceding claims, **characterized in that** the connecting element (5) is produced in one piece.

6. Grounding nuts chain (1) according to one of the preceding claims, **characterized in that** at least one leg end of the connecting element (5), configured in the form of an S-profile, is configured to be angled outward.

7. Grounding nuts chain (1) according to one of the preceding claims, **characterized in that** multiple connecting elements (5) are connected to one another and form a connecting element strip (7).

8. Grounding nuts chain (1) according to one of the preceding claims, **characterized in that** the connecting elements (5) respectively comprise at least one grounding part (13).

9. Grounding nuts chain (1) according to claim 8, **characterized in that** at least one grounding part (13) in the connecting element (5) configured in S-profile shape is of inwardly-protruding design and a protruding end portion of the grounding part (13) is directed outward, and **in that** the end portion of the grounding part (13) can be shifted in an outwardly-protruding manner when fastening a component to the grounding nuts chain (1).

## Revendications

1. Chaîne d'écrous de mise à la terre (1) destinée à être disposée sur une armoire de distribution (3), une tôle perforée, un profilé perforé ou similaire, la chaîne d'écrous de mise à la terre (1) comportant plusieurs écrous (4), les écrous (4) étant disposés espacés les uns des autres, des écrous (4) respectivement disposés adjacents étant reliés entre eux par le biais d'un élément de liaison (5) et un écart entre les écrous (4) étant adapté à un écartement des trous d'évidements (6) de l'armoire de distribution (3), de la tôle perforée ou similaire, de telle sorte que les écrous (4) de la chaîne d'écrous de mise à la terre (1) peuvent être disposés sur les évidements (6), **caractérisée en ce que** l'élément de liaison (5) comporte une branche de retenue (10), de telle sorte que l'élément de liaison (5) peut être disposé par serrage sur une portion de fixation de l'armoire de distribution (3), de la tôle perforée ou similaire et **en ce que** l'élément de liaison (5) est conçu en forme de profilé en S, la branche de retenue (10) se transformant en une branche d'appui, la portion de fixation pouvant être fixée par serrage entre la branche d'appui et la branche de retenue (10), la branche d'appui se transformant en une branche de réception et les écrous (4) étant disposés entre la branche de réception et la branche d'appui.

2. Chaîne d'écrous de mise à la terre (1) selon la revendication 1, **caractérisée en ce qu'**au moins un élément de liaison (5) comporte un moyen de sectionnement (9), la chaîne d'écrous de mise à la terre (1) pouvant être sectionnée à l'aide du moyen de sectionnement (9).

3. Chaîne d'écrous de mise à la terre (1) selon la revendication 1 ou la revendication 2, **caractérisée en ce que** la branche de retenue (10) comporte une partie de serrage (11) .

4. Chaîne d'écrous de mise à la terre (1) selon l'une des revendications précédentes, **caractérisée en ce que** des évidements sont prévus dans la branche de réception, les écrous (4) pouvant être fixés respectivement par serrage entre un bord de l'évidement respectif et la branche d'appui.

5. Chaîne d'écrous de mise à la terre (1) selon l'une des revendications précédentes, **caractérisée en ce que** l'élément de liaison (5) est fabriqué d'un seul tenant.

6. Chaîne d'écrous de mise à la terre (1) selon l'une des revendications précédentes, **caractérisée en ce qu'**au moins une extrémité de branche de l'élément de liaison (5) conçu en forme de profilé en S est conçue coudée vers l'extérieur.

7. Chaîne d'écrous de mise à la terre (1) selon l'une des revendications précédentes, **caractérisée en ce que** plusieurs éléments de liaison (5) sont reliés entre eux et forment une bande d'éléments de liaison (7).

8. Chaîne d'écrous de mise à la terre (1) selon l'une des revendications précédentes, **caractérisée en ce que** les éléments de liaison (5) comportent respectivement au moins une partie de mise à la terre (13).

9. Chaîne d'écrous de mise à la terre (1) selon la revendication 8, **caractérisée en ce qu'**au moins une partie de mise à la terre (13) est réalisée en saillie vers l'intérieur pour l'élément de liaison (5) en forme de profilé en S et une portion d'extrémité en saillie de la partie de mise à la terre (13) est orientée vers l'extérieur, et **en ce que** la portion d'extrémité de la partie de mise à la terre (13) peut être déplacée en saillie vers l'extérieur lors d'une fixation d'un composant à la chaîne d'écrous de mise à la terre (1).
